(19) **Europäisches Patentamt**
**European Patent Office**
**Office européen des brevets**

(11) **EP 2 932 464 B1**

(12) **FASCICULE DE BREVET EUROPEEN**

(45) Date de publication et mention de la délivrance du brevet:
**11.09.2019 Bulletin 2019/37**

(21) Numéro de dépôt: **13802630.7**

(22) Date de dépôt: **10.12.2013**

(51) Int Cl.:
***G06T 3/40*** (2006.01)

(86) Numéro de dépôt international:
**PCT/EP2013/076042**

(87) Numéro de publication internationale:
**WO 2014/095480 (26.06.2014 Gazette 2014/26)**

(54) **PROCÉDÉ D'AFFICHAGE ET SYSTÈME D'AIDE À LA NAVIGATION**

ANZEIGEVERFAHREN UND SYSTEM ZUR NAVIGATIONSUNTERSTÜTZUNG

METHOD OF DISPLAY AND SYSTEM FOR AIDING NAVIGATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2012 FR 1203441**

(43) Date de publication de la demande:
**21.10.2015 Bulletin 2015/43**

(73) Titulaire: **THALES**
**92200 Neuilly-sur-Seine (FR)**

(72) Inventeurs:
• **LE MEUR, Alain**
**78995 Elancourt Cedex (FR)**
• **PAYOT, Etienne**
**78995 Elancourt Cedex (FR)**

(74) Mandataire: **Lavoix**
**2, place d'Estienne d'Orves**
**75441 Paris Cedex 09 (FR)**

(56) Documents cités:
**US-A1- 2005 007 386    US-A1- 2011 291 918**
**US-B1- 7 180 476**

• **RYUGO KIJIMA: "A Development of Reflex HMD-HMD with time delay compensation capability -", PROCS OF INTERNATIONAL SYMPOSIUM ON MIXED REALITY, ISMR2001, 2001, pages 40-47, XP002712316,**
• **KIJIMA R ET AL: "Reflex HMD to compensate lag and correction of derivative deformation", PROCEEDINGS IEEE 2002 VIRTUAL REALITY. (VR). ORLANDO, FL, MARCH 24 - 28, 2002; LOS ALAMITOS, CA : IEEE COMP. SOC, US, 24 mars 2002 (2002-03-24), pages 172-179, XP010589295,**
• **REGAN M ET AL: "PRIORITY RENDERING WITH A VIRTUAL REALITY ADDRESS RECALCULATION PIPELINE", COMPUTER GRAPHICS PROCEEDINGS. ANNUAL CONFERENCE SERIES. SIGGRAPH, 24 juillet 1994 (1994-07-24), pages 155-162, XP001182870,**
• **ASHIKHMIN M ED - GIBSON S ET AL: "A TONE MAPPING ALGORITHM FOR HIGH CONTRAST IMAGES", RENDERING TECHNIQUES 2002. EUROGRAPHICS WORKSHOP PROCEEDINGS. PISA, ITALY, JUNE 26 - 28, 2002, 26 June 2002 (2002-06-26), pages 145-155, XP001232388,**

## Description

La présente invention concerne un procédé d'affichage. L'invention se rapporte également à un système d'aide à la navigation et à un véhicule comportant le système d'aide à la navigation.

Le domaine visé est celui de l'aide à la navigation d'un véhicule aérien ou terrestre, et plus spécifiquement, de l'amélioration de la perception de l'environnement extérieur du véhicule.

Les opérateurs d'un véhicule aérien ou terrestre, comme le pilote, sont tenus de prendre en compte l'environnement extérieur du véhicule dans leurs différentes tâches. A titre d'exemple, la trajectoire effectivement choisie pour un véhicule aérien est fonction de l'environnement du véhicule.

Pour obtenir une bonne perception de l'environnement du véhicule, l'opérateur est souvent équipé d'un casque de réalité augmentée. Un tel casque permet à l'opérateur de visualiser simultanément sur un même écran semi-transparent une partie de l'environnement en vision directe et des images projetées de la même partie de l'environnement acquise par un dispositif de détection.

Par exemple, le dispositif de détection comprend plusieurs caméras fonctionnant dans l'infrarouge. Dans ce cas, l'opérateur visualise la partie d'environnement à la fois dans la bande visible (en vision directe) et dans une bande infrarouge (via le dispositif de détection). L'opérateur dispose ainsi de plus d'informations sur l'environnement du véhicule que par simple vision directe.

Mais, du fait du temps de traitement des images, il existe un retard entre l'instant où les images sont acquises par le dispositif de détection et l'instant où les images sont projetées à l'opérateur pour visualisation. Ce retard est appelé « temps de latence » dans la suite de la description.

Le temps de latence se traduit pour l'opérateur par un temps de latence en contenu et un temps de latence en position.

A titre d'exemple, le temps de latence en contenu se manifeste à l'observation d'une voiture se déplaçant dans l'environnement de l'arrière vers l'avant alors que le pilote et le véhicule restent fixes. Le véhicule observé en vision directe sera en avance par rapport au véhicule projeté. Pour que ce décalage entre l'image vue par l'opérateur en vision directe et l'image projetée soit tolérable par l'opérateur, il convient de limiter le temps de latence en contenu à 80 millisecondes (ms).

Le temps de latence en position se manifeste notamment lorsque le véhicule est fixe avec un environnement sans éléments mobiles et que le pilote bouge la tête. Il existe alors un décalage entre l'orientation du pilote au moment de la projection de l'image sur l'écran du casque et la direction de visée des caméras au moment de l'acquisition des images par les caméras. Ainsi, l'image projetée et l'image visualisée en vision directe se chevauchent sans se superposer, bien que l'environnement reste inchangé entre l'instant d'acquisition des images et l'instant de projection des images sur l'écran du casque. En cas de mouvement continu du casque de l'opérateur, un phénomène de traînage se produit. De ce fait, il convient de limiter le temps de latence en position à 20 ms.

Il est donc souhaitable de réduire le plus possible le temps de latence, et en particulier le temps de latence en position.

Pour cela, il est connu du document US-B-7 148 861 une unité de traitement d'image qui affiche des images de vision améliorée sur la base d'une pluralité de sources d'images. L'unité de traitement d'image comprend une unité de traitement série et une unité de traitement parallèle.

L'unité de traitement série effectue les calculs de données à faible volume requis par l'unité de traitement parallèle pour l'affichage d'une image. L'unité de traitement série précalcule des transformations requises pour convertir les données issues de chaque source vers un système de coordonnées principal.

L'unité de traitement parallèle utilise les transformations et corrèle les données issues de chaque source avec un affichage pixel par pixel, de manière à fournir des données d'affichage avec une latence réduite.

Mais, la mise en oeuvre de l'unité de traitement du document US-B-7 148 861 est complexe.

Il est également connu de réaliser un filtrage prédictif sur les mouvements de l'opérateur pour obtenir une orientation prédite de l'opérateur et d'afficher l'image acquise par le dispositif de détection en fonction de l'orientation prédite.

Mais, la mise au point des filtres permettant le filtrage prédictif s'avère délicate, notamment parce que les mouvements de tête des opérateurs sont brusques et difficilement prédictibles.

Les documents US 2005/0007386 A et US 2011/0291918 décrivent encore d'autres exemples de dispositifs d'affichage.

Il existe donc un besoin pour un procédé d'affichage d'une image sur un écran d'un casque d'un système d'aide à la navigation qui soit de mise en oeuvre aisée et qui permette de réduire le temps de latence.

A cet effet, il est proposé un procédé d'affichage d'une image sur un écran d'un casque d'un système d'aide à la navigation. Le système d'aide à la navigation comprend le casque et un calculateur. Le procédé d'affichage comprend les étapes successives de mesure de l'orientation du casque de l'opérateur muni du casque de traitement d'une première image ayant un premier nombre de pixels pour obtenir une première image traitée, d'extraction d'une partie de la première image traitée en fonction de l'orientation mesurée du casque pour obtenir une deuxième image, la deuxième image ayant un deuxième nombre de pixels strictement inférieur au premier nombre de pixels et d'envoi par le calculateur au casque de la deuxième image pour affichage sur l'écran.

Selon des modes de réalisation préférés de l'invention, le procédé comprend l'une ou plusieurs des caractéristiques suivantes:

- à l'étape d'extraction, l'orientation du casque mesurée est le centre de la deuxième image.
- le rapport entre le premier nombre de pixels et le deuxième nombre de pixels est choisi à partir d'une majoration de l'amplitude des mouvements du casque de l'opérateur pendant la durée de l'étape de traitement.
- le rapport entre le premier nombre de pixels et le deuxième nombre de pixels est inférieur à 150%, de préférence inférieur à 130%.
- la première image a une première taille selon une première direction et une deuxième taille selon une deuxième direction perpendiculaire à la première direction, la deuxième image a une troisième taille selon la première direction et une quatrième taille selon la deuxième direction, le rapport entre la première taille et la troisième taille étant égal au rapport entre la deuxième taille et la quatrième taille.
- le système d'aide à la navigation comprend, en outre une pluralité de caméras propres à acquérir au moins une image d'une partie d'un environnement.
- le procédé comprend, en outre, les étapes de réception par le calculateur d'images d'une partie de l'environnement acquises par la pluralité de caméras, de fusion des images issues de la pluralité de caméras pour obtenir une image fusionnée de la partie de l'environnement, d'extraction d'une partie de l'image fusionnée pour obtenir la première image, de détermination de l'orientation du casque de l'opérateur préalablement à l'étape d'extraction de la partie de l'image fusionnée, extraction de la partie de l'image fusionnée étant fonction de l'orientation du casque déterminée à l'étape de détermination..
- à l'étape d'extraction, l'orientation du casque déterminée est le centre de la première image.

L'invention concerne aussi un procédé d'affichage d'images sur les écrans respectifs d'au moins deux casques d'un système d'aide à la navigation. Le système d'aide à la navigation comporte au moins deux casques, une pluralité de caméras propres à acquérir au moins une image d'une partie d'un environnement et un calculateur. Le procédé comprend, pour chaque écran, les étapes du procédé tel que précédemment décrit.

L'invention concerne également un système d'aide à la navigation pour véhicule comprenant un calculateur et au moins un casque, le calculateur étant adapté à la mise en oeuvre du procédé tel que précédemment décrit.

L'invention concerne aussi un véhicule comprenant le système d'aide à la navigation tel que précédemment décrit.

L'invention a aussi pour objet un procédé d'affichage selon la revendication 1.

L'invention porte aussi sur un système d'aide à la navigation pour véhicule selon la revendication 8.

L'invention concerne aussi un véhicule selon la revendication 9.

D'autres caractéristiques et avantages de l'invention apparaîtront à la lecture de la description détaillée qui suit de modes de réalisation de l'invention, donnés à titre d'exemple uniquement et en référence aux dessins qui sont :

- figure 1, une vue schématique d'un exemple de véhicule muni du système d'aide à la navigation selon l'invention, et
- figure 2, un ordinogramme d'un exemple de procédé selon l'invention.

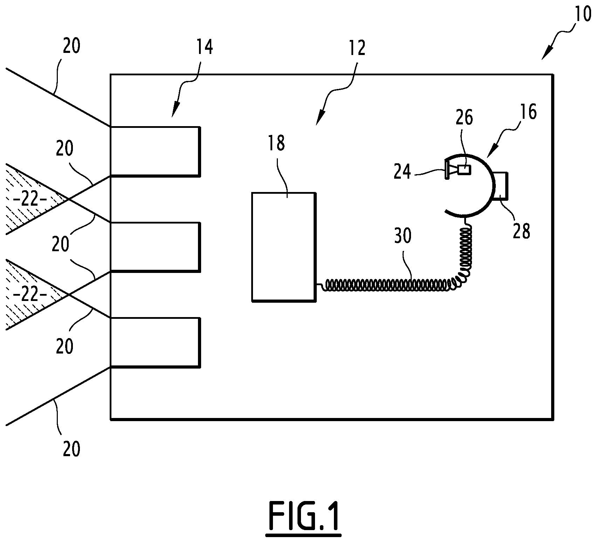

Le véhicule 10 représenté à la figure 1 est un véhicule aérien ou terrestre. Par exemple, le véhicule 10 est un hélicoptère.

Le véhicule 10 comprend un système 12 d'aide à la navigation.

Le système 12 d'aide à la navigation comprend une pluralité de caméras 14, un casque 16 et un calculateur 18.

Dans l'exemple proposé, le système 12 d'aide à la navigation comporte trois caméras 14.

Les trois caméras 14 sont agencées sur une partie du véhicule 10 de manière que les caméras 14 soient propres à acquérir des images de l'environnement du véhicule 10. Par exemple, les caméras 14 font partie de la coque du véhicule 10.

Les champs d'observation des caméras 14 déterminent les parties de l'environnement dans lesquelles les caméras 14 sont propres à acquérir des images. Les champs d'observation sont délimités sur la figure 1 par les traits continus 20.

Les champs des caméras 14 se recouvrent ainsi que l'indique les zones 22 de recouvrement mises en évidence par des traits interrompus. Cela permet d'éviter l'existence de zones angulaires non observées à proximité d'un opérateur du véhicule.

Selon l'exemple, les caméras 14 sont propres à détecter des photons émis par l'environnement dans l'infrarouge.

En variante, les caméras 14 sont propres à détecter des photons émis par l'environnement dans le spectre visible avec un faible niveau de lumière (par exemple au crépuscule). De telles caméras 14 visibles sont parfois désignées sous l'acronyme « BNL » pour « Bas Niveau de Lumière ».

Le casque 16 est destiné à un opérateur du véhicule 10.

Le casque 16 comporte un écran 24, un projecteur 26 d'image et un gyromètre 28.

Le projecteur 26 d'image est propre à projeter une image sur l'écran 24.

L'écran 24 est semi-transparent pour permettre à l'opérateur de visualiser simultanément l'environnement extérieur du véhicule 10 et une image projetée par le projecteur 26. Pour cette raison, le casque 16 est qualifié de «casque 16 de réalité augmentée ».

Le gyromètre 28 est propre à délivrer des informations qui permettent de déterminer l'orientation du casque 16 par rapport à une référence R en prenant en compte les mouvements du véhicule fournis par une centrale inertielle du véhicule ou par tout autre moyen. Par exemple, le gyromètre 28 délivre des mesures de dérivées angulaires selon trois axes d'un repère inertiel. A titre d'exemple, la référence R est l'orientation du casque 16 dans laquelle l'opérateur regarde droit devant. Le mouvement propre du véhicule 10 est pris en compte pour ramener l'orientation du casque 16 calculée à partir des informations du gyromètre 28 dans un repère absolu dans le repère véhicule. L'orientation du casque 16 de l'opérateur est alors repérée par deux angles par rapport à la référence R.

Le casque 16 est relié au calculateur 18 par un câble 30.

Le calculateur 18 est propre à recevoir les images acquises par les caméras 14, à traiter les images reçues puis à les faire afficher sur l'écran 24 du casque 16 par le projecteur 26.

Le calculateur 18 est, par exemple, un processeur graphique. Un processeur graphique, ou GPU (de l'acronyme anglais Graphics Processing Unit) est un circuit intégré présent sur une carte graphique et assurant notamment les fonctions de calcul de l'affichage.

En variante, le calculateur 18 est un circuit logique programmable. Un tel circuit est un circuit intégré logique susceptible d'être reprogrammé après sa fabrication. Par exemple, le calculateur 18 est un circuit FPGA (de l'acronyme anglais field-programmable gâte array) qui est un ensemble de portes programmables in situ.

Le fonctionnement du système 12 d'aide à la navigation est maintenant décrit.

Les caméras 14 acquièrent simultanément trois images de l'environnement extérieur du véhicule 10. Les trois images sont transmises au calculateur 18.

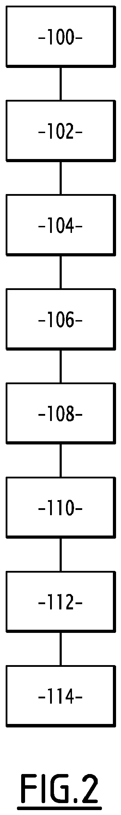

Le calculateur 18 met alors en oeuvre un procédé d'affichage d'une image sur l'écran 24 du casque 16 en référence à l'ordinogramme de la figure 2.

Le procédé comprend une étape 100 de réception par le calculateur 18 des images de la partie d'environnement acquises par les trois caméras 14.

Le procédé comporte également une étape 102 de détermination de l'orientation du casque 16 par rapport à la référence R.

L'étape 102 est mise en oeuvre par une mesure avec le gyromètre 28.

En variante, l'orientation du casque 16 déterminée est une orientation prédite à l'aide d'un filtrage prédictif sur les mouvements de l'opérateur.

Le procédé comporte alors une étape 104 de fusion des images reçues à l'étape 100 de réception pour obtenir une image fusionnée IF de l'environnement.

Lors de la fusion, il est notamment tenu compte du fait que les zones 22 de recouvrement sont imagées par plusieurs caméras 14.

Par exemple, pour un pixel dans une zone 22 de recouvrement imagée par deux caméras 14, l'étape de fusion comprend un calcul de la valeur du pixel par calcul d'une combinaison linéaire de la valeur du pixel pour une des deux caméras 14 et de la valeur du même pixel pour l'autre caméra 14.

Selon une variante, les coefficients de la combinaison linéaire dépendent de la distance du pixel considéré aux pixels situés à la périphérie des images à fusionner.

L'étape 104 de fusion permet ainsi d'obtenir l'image fusionnée IF qui est une image panoramique de l'environnement. L'image fusionnée IF associe à un point du champ d'observation de l'opérateur une valeur de pixel. Les coordonnées de ce point sont exprimables dans plusieurs repères. En particulier, les coordonnées du point sont repérables dans le même repère qui permet de repérer l'orientation de l'opérateur.

Selon une variante, seules les images qui serviront à la réalisation de l'image finale sont fusionnées. Par exemple, si l'opérateur regarde à gauche du véhicule, les images acquises par les caméras à droite ne sont pas fusionnées ; seules les images acquises par les caméras à gauche et au centre sont utilisées pour la fusion.

Le procédé comprend également une première étape 106 d'extraction d'une partie de l'image fusionnée IF pour obtenir une première image I1.

La première image I1 a un premier nombre de pixels N1.

La première image I1 a une première taille T1 selon une première direction de l'image et une deuxième taille T2 selon une deuxième direction de l'image perpendiculaire à la première direction de l'image.

A titre d'exemple, la première taille T1 est de 1200 pixels et la deuxième taille T2 est de 1000 pixels. Le premier nombre N1 de pixels est alors de 1200 x 1000 pixels.

Selon l'exemple présenté, la première étape 106 d'extraction de la partie de l'image fusionnée IF est fonction de l'orientation du casque 16 déterminée à l'étape de détermination 102.

A titre d'illustration, l'orientation du casque 16 déterminée à l'étape de détermination 102 est le centre de la première image I1.

Ainsi, dans ce cas, pour une première taille T1 et une deuxième taille T2 données, la première étape 106 d'extraction est mise en oeuvre en deux temps. Il est d'abord déterminé quel pixel de l'image fusionnée IF correspond à l'orientation du casque 16 déterminée à l'étape de détermination 102. Dans un deuxième temps, est extrait un rectangle de tailles T1 et T2 autour de ce pixel. Les pixels appartenant à ce rectangle forment la première image I1.

Le procédé comporte également une étape 108 de traitement de la première image I1 pour obtenir une première image traitée IT1.

L'étape 108 de traitement vise à améliorer la qualité de la première image I1.

A titre d'illustration, selon un mode de réalisation, le traitement comprend la mise en oeuvre d'un traitement de la luminosité de la première image dit de « tone mapping ». Un tel traitement permet de générer une image dans laquelle l'ensemble des éléments de l'image sont correctement exposés. L'absence de surexposition et de sous-exposition rend possible une observation de l'image aussi bien dans les zones sombres que dans les zones claires.

L'image traitée IT1 a le même nombre de pixels que la première image I1.

Le procédé comporte aussi une étape 110 de mesure de l'orientation du casque 16 après l'étape 108 de traitement de la première image I1.

Cette mesure est, par exemple, mise en oeuvre avec le gyromètre 28 du casque 16.

Selon une variante, le mouvement du véhicule entre les instants de mise en oeuvre des étapes 102 et 110 de mesure est également pris en compte.

Le mouvement du véhicule est, par exemple, obtenu à l'aide d'une centrale inertielle.

Dans ce cas, l'orientation du casque a été modifiée d'une valeur δ donnée par :

$$\delta = \alpha_2 - \alpha_1 + \beta$$

où

- $\alpha_1$ est l'orientation du casque à l'instant de mise en oeuvre de l'étape 102 de mesure,
- $\alpha_2$ est l'orientation du casque à l'instant de mise en oeuvre de l'étape 110 de mesure, et
- $\beta$ est le mouvement du véhicule entre les deux instants.

Le procédé comprend également une deuxième étape 112 d'extraction d'une partie de la première image traitée IT1 en fonction de l'orientation mesurée à l'étape 110 de mesure pour obtenir une deuxième image I2.

Par exemple, selon un mode de réalisation similaire à la première étape 106 d'extraction décrite précédemment, l'orientation mesurée est le centre de la deuxième image I2.

La deuxième image I2 a un deuxième nombre de pixels N2.

Par exemple, le deuxième nombre de pixels N2 est fixée par la taille de l'image qui est affichable sur l'écran 24 du fait que les dimensions de l'écran 24 sont finies.

A titre d'exemple, le deuxième nombre de pixels N2 est 1024 x 768 pixels.

Le deuxième nombre de pixels N2 est strictement inférieur au premier nombre de pixels N1.

Le rapport entre le premier nombre de pixels N1 et le deuxième nombre de pixels N2 est choisi sur la base d'une majoration de l'amplitude des mouvements du casque 16 de l'opérateur pendant la durée des étapes 104, 106 et 108 de traitement.

Supposons que l'opérateur a des mouvements brusques pendant toute la durée de l'étape 108 de traitement. Sa tête se déplace alors à au maximum 150 degrés par seconde (°/s).

La durée des étapes 104, 106 et 108 de traitement est limitée. Typiquement, la durée de l'étape de traitement est de 30 ms.

Cela implique que les orientations possibles pour le casque de l'opérateur sont limitées. L'opérateur n'a notamment pas le temps de tourner complètement la tête. Dans l'exemple présenté, au maximum, l'orientation du casque 16 de l'opérateur est modifiée de 4,5°. 4,5° est une majoration de l'amplitude des mouvements du casque 16 de l'opérateur pendant la durée des étapes 104, 106 et 108 de traitement.

Une majoration de l'amplitude des mouvements du casque 16 de l'opérateur pendant la durée de l'étape 108 de traitement permet donc d'obtenir un ensemble d'orientations possibles pour le casque de l'opérateur.

Pour chaque orientation possible (entre 0 et 4,5° dans l'exemple), un pixel central sur l'image fusionnée IF est déterminable. En supposant que le champ de vision de l'opérateur est fixé, c'est-à-dire que le nombre de pixels N2 est fixé, pour chaque pixel central déterminé par correspondance avec une orientation possible, un ensemble de N2 pixels est également déterminé. Autrement dit, à chaque orientation possible, il est associé N2 pixels autour du pixel central déterminé.

Les pixels qui appartiennent aux différents ensembles de N2 pixels pour les différentes orientations possibles sont les pixels de la première image I1.

Une majoration de l'amplitude des mouvements du casque 16 de l'opérateur pendant la durée des étapes 104, 106 et 108 de traitement et la valeur du champ angulaire vu par chaque pixel permettent donc de déterminer le nombre de pixels N1 de la première image et le nombre de pixels N2 de la deuxième image, et donc leur rapport.

Selon une autre variante, le rapport entre le premier nombre de pixels N1 et le deuxième nombre de pixels N2 est inférieur à 160%.

Dans l'exemple présenté, le rapport entre le premier nombre de pixels N1 et le deuxième nombre de pixels N2 est de 152%.

De préférence, le rapport entre le premier nombre de pixels N1 et le deuxième nombre de pixels N2 est inférieur à 130%.

En outre, selon l'exemple présenté, la deuxième image I2 a une troisième taille T3 selon la première direction de l'image et une quatrième taille T4 selon la deuxième direction de l'image.

Le rapport entre la première taille T1 et la troisième taille T3 est égal au rapport entre la deuxième taille T2 et la quatrième taille T4.

Cela signifie que le même facteur de réduction est appliqué dans les deux dimensions.

Le procédé comporte alors une étape 114 d'envoi des données relatives à la deuxième image I2 depuis le calculateur 18 vers le casque 16.

Le projecteur 16 affiche alors la deuxième image sur l'écran 24.

L'opérateur visualise alors simultanément sur l'écran 24 une partie de l'environnement en vision directe et des images projetées de la même partie de l'environnement acquise par les caméras 14.

Le procédé d'affichage comporte deux extractions. En effet, la première étape 106 d'extraction est une étape « d'extraction grossière » alors que la deuxième étape 112 d'extraction est une étape « d'extraction fine ».

Ainsi l'étape 108 de traitement est mise en oeuvre sur une partie de l'image fusionnée IF seulement. Cela permet de limiter la durée de l'étape 108 de traitement.

En outre, l'étape 114 d'envoi des données et l'étape 110 de mesure de l'orientation du casque 16 de l'opérateur sont synchronisées puisque la durée de la deuxième étape 112 d'extraction est très courte.

De plus, la deuxième image I2 affichée prend en compte une orientation mesurée du casque 16 et non une orientation prédite. De ce fait, la position de la deuxième image I2 est plus précise que dans l'état de la technique.

Le procédé permet, en conséquence, de fortement réduire la latence en position de l'image affichée à l'opérateur.

En outre, le procédé est aisé à mettre en oeuvre.

En variante, le système 12 d'aide à la navigation est adapté pour plusieurs opérateurs. A titre d'exemple, le pilote et le co-pilote sont amenés à travailler en même temps pour observer le même environnement, chacun observant une partie différente de l'environnement.

Dans ce cas, l'étape 106 de première d'extraction, l'étape 108 de traitement, l'étape 110 de mesure, l'étape 112 de deuxième extraction et l'étape 114 d'envoi des données sont mises en oeuvres simultanément pour les différents opérateurs utilisant le système 12 d'aide à la navigation.

**Revendications**

1. Procédé d'affichage d'une image sur un écran (24) d'un casque (16) d'un système (12) d'aide à la navigation, le système (12) d'aide à la navigation comprenant :

   - le casque (16),
   - un calculateur (18), et
   - une pluralité de caméras (14) propres à acquérir au moins une image d'une partie d'un environnement,

le procédé d'affichage étant **caractérisé en ce que** le procédé comprend les étapes successives de :

   - réception par le calculateur (18) d'images d'une partie de l'environnement acquises par la pluralité de caméras (14),
   - fusion des images issues de la pluralité de caméras (14) pour obtenir une image fusionnée (IF) de la partie de l'environnement,
   - détermination de l'orientation du casque (16) de l'opérateur,
   - extraction d'une partie de l'image fusionnée (IF) pour obtenir une première image (I1), l'extraction de la partie de l'image fusionnée (IF) étant fonction de l'orientation du casque (16) déterminée à l'étape de détermination,
   - traitement de la première image (I1) ayant un premier nombre de pixels (N1) pour obtenir une première image traitée (IT1), le traitement visant à améliorer la qualité de la première image (I1),
   - mesure de l'orientation du casque (16) de l'opérateur muni du casque (16),
   - extraction d'une partie de la première image traitée (IT1) en fonction de l'orientation mesurée du casque (16) pour obtenir une deuxième image (I2), la deuxième image (I2) ayant un deuxième nombre de pixels (N2) strictement inférieur au premier nombre de pixels (N1),
   - envoi par le calculateur (18) au casque (16) de la deuxième image (I2) pour affichage sur l'écran (24).

2. Procédé selon la revendication 1, dans lequel à l'étape d'extraction, l'orientation du casque (16) mesurée est le centre de la deuxième image (I2).

3. Procédé selon la revendication 1 ou 2, dans lequel le rapport entre le premier nombre de pixels (N1) et le deuxième nombre de pixels (N2) est choisi à partir d'une majoration de l'amplitude des mouvements du casque (16) de l'opérateur pendant la durée de l'étape de traitement.

4. Procédé selon l'une quelconque des revendications 1 à 3, dans lequel le rapport entre le premier nombre de pixels (N1) et le deuxième nombre de pixels (N2) est inférieur à 150%, de préférence inférieur à 130%.

5. Procédé selon l'une quelconque des revendications 1 à 4, dans lequel :

   - la première image (I1) a une première taille (T1) selon une première direction et une deuxième taille (T2) selon une deuxième direction perpendiculaire à la première direction,
   - la deuxième image (I2) a une troisième taille (T3) selon la première direction et une quatrième taille (T4) selon la deuxième direction,

le rapport entre la première taille (T1) et la troisième taille (T3) étant égal au rapport entre la deuxième taille (T2) et la quatrième taille (T4).

6. Procédé selon l'une quelconque des revendications 1 à 5, dans lequel à l'étape d'extraction, l'orientation du casque (16) déterminée est le centre de la première image (I1).

7. Procédé d'affichage d'images sur les écrans (24) respectifs d'au moins deux casques (16) d'un système (12) d'aide à la navigation, le système (12) d'aide à la navigation comprenant :

   - au moins deux casques (16),
   - une pluralité de caméras (14) propres à acquérir au moins une image d'une partie d'un environnement et
   - un calculateur (18),

   le procédé comprenant, pour chaque écran (24), les étapes du procédé selon l'une quelconque des revendications 1 à 6.

8. Système (12) d'aide à la navigation pour véhicule (10) comprenant :

   - un calculateur (18) et
   - au moins un casque (16),

   le système (12) étant **caractérisé en ce que** le calculateur (18) est adapté à la mise en oeuvre du procédé selon l'une quelconque des revendications 1 à 7.

9. Véhicule (10) comprenant le système (12) d'aide à la navigation selon la revendication 8.

**Patentansprüche**

1. Verfahren zur Anzeige eines Bilds auf einem Bildschirm (24) eines Helms (16) eines Systems (12) zur Unterstützung bei der Navigation, wobei das System (12) zur Unterstützung bei der Navigation aufweist:

   - den Helm (16),
   - eine Recheneinheit (18), und
   - eine Mehrzahl von Kameras (14), welche dazu geeignet sind, mindestens ein Bild eines Teils einer Umgebung zu erlangen,

   wobei das Verfahren zur Anzeige **dadurch gekennzeichnet ist, dass** das Verfahren aufweist die aufeinanderfolgenden Schritte des:

   - Empfangs von Bildern eines Teils der Umgebung, welche durch die Mehrzahl von Kameras (14) erlangt wurden, durch die Recheneinheit (18),
   - Vereinigen der durch die Mehrzahl von Kameras (14) ausgegebenen Bilder, um ein vereinigtes Bild (IF) des Teils der Umgebung zu erlangen,
   - Bestimmens der Ausrichtung des Helms (16) des Nutzers,
   - Extrahierens eines Teils des vereinigten Bilds (IF) zum Erlangen eines ersten Bilds (I1), wobei das Extrahieren des Teils des vereinigten Bilds (IF) von der in dem Schritt des Bestimmens bestimmten Ausrichtung des Helms (16) abhängt,
   - Bearbeitens des ersten Bilds (I1), welches eine erste Pixelzahl (N1) hat, zum Erlangen eines ersten behandelten Bilds (IT1), wobei auf die Bearbeitung zur Verbesserung der Qualität des ersten Bilds (I1) abzielt,
   - Messens der Ausrichtung des Helms (16) des Nutzers, der mit dem Helm (16) ausgestattet ist,
   - Extrahierens eines Teils des ersten behandelten Bilds (IT1) in Abhängigkeit von der gemessenen Ausrichtung des Helms (16) zum Erlangen eines zweiten Bilds (I2), wobei das zweite Bild (I2) eine zweite Pixelzahl (N2), welche echt kleiner der ersten Pixelzahl (N1) ist, hat,
   - Sendens, durch die Recheneinheit (18), des zweiten Bilds (I2) an den Helm (16) zur Anzeige auf dem Bildschirm.

2. Verfahren gemäß dem Anspruch 1, wobei, beim Schritt des Extrahierens, die gemessene Ausrichtung des Helms (16) das Zentrum des zweiten Bilds (I2) ist.

3. Verfahren gemäß dem Anspruch 1 oder 2, wobei das Verhältnis zwischen der ersten Pixelzahl (N1) und der zweiten Pixelzahl (N2) ausgehend von einer Erhöhung der Amplitude der Bewegungen des Helms (16) des Nutzers während der Dauer des Bearbeitungsschritts ausgewählt ist.

4. Verfahren gemäß irgendeinem der Ansprüche 1 bis 3, wobei das Verhältnis zwischen der ersten Pixelzahl (N1) und der zweiten Pixelzahl (N2) kleiner als 150%, vorzugsweise kleiner als 130% ist.

5. Verfahren gemäß irgendeinem der Ansprüche 1 bis 4, wobei:

   - das erste Bild (I1) eine erste Größe (T1) entlang einer ersten Richtung und eine zweite Größe (T2) entlang einer zweiten Richtung, die senkrecht zur ersten Richtung ist, aufweist,
   - das zweite Bild (I2) eine dritte Größe (T3) entlang der ersten Richtung und eine vierte Größe (T4) entlang der zweiten Richtung aufweist,

wobei das Verhältnis zwischen der ersten Größe (T1) und der dritten Größe (T3) gleich dem Verhältnis zwischen der zweiten Größe (T2) und der vierten Größe (T4) ist.

6. Verfahren gemäß irgendeinem der Ansprüche 1 bis 5, wobei, beim Schritt des Extrahierens, die bestimmte Ausrichtung des Helms (16) das Zentrum des ersten Bilds (I1) ist.

7. Verfahren zur Anzeige von Bildern auf jeweiligen Bildschirmen (24) von mindestens zwei Helmen (16) eines Systems (12) zur Unterstützung bei der Navigation, wobei das System (12) zur Unterstützung bei der Navigation aufweist:

   - mindestens zwei Helme (16),
   - eine Mehrzahl von Kameras (14), welche dazu geeignet sind, mindestens ein Bild eines Teils einer Umgebung zu erlangen,
   - eine Recheneinheit (18),

   wobei das Verfahren für jeden Bildschirm (24) die Schritte des Verfahrens gemäß irgendeinem der Ansprüche 1 bis 6 umfasst.

8. System (12) zur Unterstützung bei der Navigation für Fahrzeug (10), aufweisend:

   - eine Recheneinheit (18), und
   - mindestens einen Helm (16),

   wobei das System (12) **dadurch gekennzeichnet ist, dass** die Recheneinheit (18) dazu eingerichtet ist, das Verfahren gemäß irgendeinem der Ansprüche 1 bis 7 umzusetzen.

9. Fahrzeug (10), aufweisend System (12) zur Unterstützung bei der Navigation das gemäß dem Anspruch 8.

**Claims**

1. A display method for displaying an image on a screen (24) of a headset (16) of a system (12) for aiding navigation, the system (12) for aiding navigation comprising of:

   - the headset (16),
   - a calculator (18), and
   - a plurality of cameras (14) suitable for acquiring at least an image of a part of an environment,

   the display method being **characterised in that** the method comprises the successive steps of:

   - receiving by the calculator (18) of images of a part of the environment acquired by the plurality of cameras (14);
   - merging of the images derived from the plurality of cameras (14) so as to obtain a merged image (IF) of the part of the environment;
   - determining of the orientation of the headset (16) of the operator;
   - extraction of a part of the merged image (IF) so as to obtain a first image (I1), the extraction of the part of the merged image (IF) being a function of the orientation of the headset (16) determined in the step of determination;
   - processing of the first image (I1) having a first number of pixels (N1) so as to obtain a first processed image (IT1), the treatment aiming at improving the quality of the first image (I1);
   - measurement of the orientation of the headset (16) of the operator provided with the helmet (16);
   - extraction of a part of the first processed image (IT1) as a function of the measured orientation of the headset (16) so as to obtain a second image (I2), the second image (I2) having a second number of pixels (N2) strictly lower than the first number of pixels (N1);
   - dispatching by the calculator (18) to the headset (16) the second image (I2) for display on the screen (24).

2. A method according to claim 1, wherein during the step of extraction, the orientation of the headset (16) measured is the centre of the second image (I2).

3. A method according to claim 1 or 2, wherein the ratio between the first number of pixels (N1) and the second number of pixels (N2) is selected based on an increase in the amplitude of movements of the headset (16) of the operator over the duration of the step of image processing.

4. A method according to any one of claims 1 to 3, wherein the ratio between the first number of pixels (N1) and the second number of pixels (N2) is less than 150%, preferably less than 130%.

5. A method according to any one of claims 1 to 4, wherein:

   - the first image (I1) has a first size (T1) along a first direction and a second size (T2) along a second direction that is perpendicular to the first direction;
   - the second image (I2) has a third size (T3) along the first direction and a fourth size (T4) along the second direction;

   with the ratio between the first size (T1) and the third size (T3) being equal to the ratio between the second size (T2) and the fourth size (T4).

6. A method according to any one of claims 1 to 5, wherein during the extraction step, the orientation of the headset (16) determined is the centre of the first image (11).

7. An image display method for displaying images on the respective screens (24) of at least two headsets (16) of a system (12) for aiding navigation, the system (12) for aiding navigation including:

   - at least two headsets (16);
   - a plurality of cameras (14) capable of acquiring at least one image of a part of an environment; and
   - a calculator (18);

   the method comprising, for each screen (24), the steps of the method according to any one of claims 1 to 6.

8. A navigation aid system (12) for aiding navigation for a vehicle (10) comprising:

   - a calculator (18); and
   - at least one headset (16);

   the system (12) being **characterised in that** the calculator (18) is capable of ensuring the operational implementation of the method according to any one of claims 1 to 7.

9. A vehicle (10) including the system (12) for aiding navigation according to claim 8.

**FIG.1**

-100-

-102-

-104-

-106-

-108-

-110-

-112-

-114-

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7148861 B
- US 20050007386 A
- US 20110291918 A